# EUROPÄISCHE PATENTSCHRIFT

(11) **EP 2 080 460 B1**
(45) Veröffentlichungstag und Bekanntmachung des Hinweises auf die Patenterteilung: **14.03.2012**
(21) Anmeldenummer: 09100023.2
(22) Anmeldetag: 08.01.2009
(51) Int. Cl.: A47J 31/46

(54) **Rückstoßdämpfer für Schwingkolbenpumpe**
Recoil damper for oscillating piston pump
Amortisseur de recul pour pompe à piston oscillant

(30) Priorität: 15.01.2008 DE 102008004460
(43) Veröffentlichungstag der Anmeldung: 22.07.2009
(73) Patentinhaber: BSH Bosch und Siemens Hausgeräte GmbH, 81739 München (DE)
(72) Erfinder: Aigner, Andreas, 83313, Siegsdorf (DE)

(56) Entgegenhaltungen:
- EP-A- 1 795 095
- WO-A-2006/074170
- WO-A-2007/046702

## Beschreibung

Die Erfindung betrifft eine Kaffeemaschine mit einem Wasservorratstank und einer Heizeinrichtung, die durch eine Flüssigkeitsleitung verbunden sind, in der ein Durchflussmesser und eine Schwingkolbenpumpe oder Vibrationspumpe angeordnet sind. Eine solche kafleemaschine ist aus dem Dokument. WO 2007/046702 bekannt. Schwingkolbenpumpen sind kostengünstige und leicht ansteuerbare Pumpen, die daher üblicherweise in Kaffeemaschinen eingesetzt werden. Um ihre jeweilige Fördermenge genau ermitteln und damit das Zubereitungswasser für Kaffeegetränke genau dosieren zu können, werden stromauf der Pumpe Durchflussmesser, so genannte Flowmeter, angeordnet. Auf der Saugseite der Pumpe angeordnet, unterliegen sie theoretisch keinen Druckbelastungen, weshalb sie einen einfachen und kostengünstigen Aufbau aufweisen können. Sie enthalten ein Flügelrad, das vom zuströmenden Wasser tangential angeströmt wird, das das Gehäuse des Flowmeters axial verlässt. Am Flügelrad sind Magnete angeordnet, mit deren Hilfe die Umdrehungen des Flügelrades erfasst und daraus der Durchfluss ermittelt werden kann.

In einer Schwingkolbenpumpe schwingt ein Metallkolben mit einer Netzfrequenz, beispielsweise mit ca. 50 Hertz in Europa oder 60 Hz in USA. Dadurch werden Druckrückstöße in der Wasserleitung entgegen der Förderrichtung induziert. Sie reichen bis zum Durchflussmesser zurück, so dass dessen Messergebnis negativ beeinträchtigt werden kann. Daher wird der Durchflussmesser auf eine bestimmte so genannte Flowmeterkonstante justiert, die eine Korrelation zwischen dem Signal des Durchflussmessers, das durch den Magneten am Flügelrad erzeugt wird, und dem tatsächlich vorliegenden Durchfluss herstellt. Die Flowmeterkonstante ist jedoch abhängig von den Druckverhältnissen, die zur Zeit ihrer Festlegung in der Kaffeemaschine herrschten, und der anliegenden Spannung. Beim Einsatz der Kaffeemaschine bei einem Benutzer jedoch können sowohl die Druckverhältnisse in der Maschine als auch die Netzspannung schwanken, so dass der Durchflussmesser möglicherweise eine andere Fördermenge signalisiert, als tatsächlich gefördert wurde. Durch die Abweichungen in der Fördermenge können sich für das selbe Kaffeegetränk in verschiedenen Tassen unterschiedliche Füllhöhen ergeben.

Zur Abhilfe schlägt ein Hersteller von Durchflussmessern vor, eine Schlaufe aus einem Silikonschlauch der Härte 60 Shore (A) bei einem Innendurchmesser des Schlauchs von mindestens 5 mm und einer Wandstärke von 1,5 mm anzuordnen. Das in der Schlaufe verlegte Schlauchstück soll möglichst lang sein. Der Einbau einer derartigen Schlaufe ist jedoch problematisch, weil sie einerseits einen merklichen Platzbedarf erfordert und andererseits vor allem die Gefahr besteht, dass der flexible dünne Schlauch bei der Montage abgeknickt wird und dadurch weniger bis gar nicht durchlässig ist.

Die Erfindung hat es sich daher zur Aufgabe gemacht, eine Einrichtung anzugeben, mit der die Auswirkungen von Druckrückschlägen der Pumpe auf den Durchflussmesser weitestgehend reduziert werden, die Platz sparend ist und die zuverlässig funktionsfähig montiert werden kann.

Sie löst diese Aufgabe bei einer Kaffeemaschine der eingangs genannten Art dadurch, dass in einem Leitungsabschnitt zwischen dem Durchflussmesser und der Pumpe mindestens zwei Durchmesseränderungen vorgesehen sind, zwischen denen ein Behälter für ein Entspannungsvolumen als Teil des geförderten Wassers angeordnet ist, der das Entspannungsvolumen ausdehnbar aufnimmt. Die Erfindung nutzt also die Erkenntnis, dass Druckrückschläge durch eine Expansionsmöglichkeit der Wassermenge zwischen der Pumpe und dem Durchflussmesser gemildert werden können. Im Gegensatz zum Stand der Technik, der dafür eine möglichst lange und flexible Schlauchstrecke erfordert, verfolgt die Erfindung das Prinzip, diese Expansionsmöglichkeit in einem kurzen definierten Abschnitt im Leitungsweg zu ermöglichen. Dazu schafft sie einen speziellen Behälter, der ein Entspannungsvolumen als Teil des geförderten Wassers aufnimmt. Dieses zusätzliche Volumen erhält innerhalb des Behälters die erforderliche Aufnahme, indem dieser das Entspannungsvolumen in einer Weise aufnimmt, die zusätzlichem Volumen entsprechend eine Ausdehnung ermöglicht. Die Durchmesseränderungen, die zusammen mit dem Behälter den Rückstoßdämpfer bilden, begrenzen den Behälter innerhalb des Leitungsabschnitts und stauen das bei einem Druckrückstoß zurückströmende Wasser innerhalb des Behälters und in Druckrichtung noch vor dem Durchflussmesser.

Die Durchmesseränderungen können vielgestaltig ausgebildet sein. Nach einer vorteilhaften Ausgestaltung der Erfindung ist eine Durchmessererweiterung stromauf und eine Durchmesserverengung stromab des Behälters angeordnet, sodass sich zwischen den Durchmesseränderungen ein Tank ausbilden lässt, der das zusätzliche Volumen aufnimmt. Dadurch kann eine kurze und gedrungene Bauform für den Rückstoßdämpfer erzielt werden, der in Strömungsrichtung nur einen geringen Platzbedarf innerhalb der Kaffeemaschine erfordert. Die kurzen Leitungsabschnitte stromauf und stromab des Rückschlagdämpfers gewährleisten eine zuverlässig fehlerfreie Montage und Wirksamkeit des hydraulischen Systems.

Nach einer dazu alternativen Ausgestaltungsform der Erfindung kann in dem Leitungsabschnitt stromauf und stromab des Behälters jeweils eine Drosselstelle angeordnet sein. Jede Drosselstelle stellt sowohl eine Durchmesserverengung als auch eine Durchmessererweiterung dar, wobei der Eingangsdurchmesser stromauf der Drosselstelle nicht zwingend gleich dem Ausgangsdurchmesser stromab der Drosselstelle sein muss. Zur Ausbildung des erfinderischen Rückstoßdämpfers ist der Eingangsdurchmesser stromauf der ersten Drossel kleiner oder gleich ihrem Ausgangsdurchmesser. Die Durchmesserverhältnisse bei der zweiten Drossel dagegen können dann genau umgekehrt sein. Bei gleichem Eingangs- und Ausgangsdurchmesser stromauf und stromab der beiden Drosselstellen ergibt sich also ein Behälter innerhalb des Leitungsabschnitts, der denselben Durchmesser wie dieser aufweist. Dadurch lässt sich für den Rückstoßdämpfer eine schlanke Bauform erzielen, die bei beengten Platzverhältnissen von Vorteil sein kann.

Das Prinzip des Rückstoßdämpfers beruht darauf, dass sich das Entspannungsvolumen innerhalb des Behälters ausdehnen kann. Bei einem Druckrückstoß staut sich das Wasser innerhalb des Behälters. Durch die Expansion des zusätzlichen Volumens baut es den Druck innerhalb des Behälters ab. Nach einer ersten vorteilhaften Ausgestaltung der Erfindung kann die Expansionsmöglichkeit des Rückstoßvolumens dadurch erzielt werden, dass beim Füllen des Tanks mit Wasser eine Luftblase entsteht, die bei einem Druckrückstoß zugunsten des Entspannungsvolumens komprimiert wird. Dadurch ist eine technisch einfache Entspannungsmöglichkeit für das druckbeaufschlagte Wasser gegeben; die Montage des Tanks bedeutet keine Schwierigkeiten.

Für das Funktionieren ist jedoch sicherzustellen, dass der Tank gegenüber seiner Umgebung luftdicht ist und sich in ihm unter allen Betriebsbedingungen eine Luftblase befindet. Insbesondere bei der Inbetriebnahme der Kaffeemaschine, wenn sie erstmals mit Wasser befüllt wird, muss dafür gesorgt sein, dass der Tank in seinem oberen Bereich frei von Wasser bleibt und sich die Luftblase bilden kann. Auch bei längeren Standzeiten darf sie sich nicht abbauen. Um derartige potenzielle Schwierigkeiten zu vermeiden, kann nach einer weiteren Ausgestaltungsform der Erfindung die Expansionsmöglichkeit auch ausschließlich oder zusätzlich dadurch sichergestellt sein, dass der Behälter dehnbare Wandungen aufweist. Diese Expansionsmöglichkeit kann genau bemessen und konstruktiv zuverlässig sichergestellt werden und nicht ohne weiteres verloren gehen. Aufgrund der Flexibilität des Behälters kann er zudem die Montage des Gesamtsystems erleichtern, indem er räumliche Toleranzen geringfügig ausgleichen kann. Unter Inkaufnahme einer Verlängerung des Behälters in Strömungsrichtung können seine Abmessungen in radialer Richtung bis auf den Durchmesser der Flüssigkeitsleitung reduziert werden. Bei ausreichender Flexibilität der Behälterwandungen kann dann auf eine Luftblase verzichtet werden.

Nach einer weiteren vorteilhaften Ausgestaltung der Erfindung können die Drosselstellen durch Drosselscheiben als Durchmesseränderung ausgebildet sein. Dadurch lässt sich eine besonders kurze Bauform erzielen, weil die Durchmesseränderung selbst nur einen sehr kurzen Leitungsabschnitt für sich in Anspruch nimmt. Die Drosselscheiben können zudem einfach in einen Schlauchabschnitt eingeschoben werden, sind also leicht zu montieren. Der durch sie definierte Entspannungsbehälter hat also denselben Durchmesser wie der übrige Leitungsabschnitt.

Nach einer weiteren vorteilhaften Ausgestaltung der Erfindung können die Drosselstellen aus eingeschobenen Rohrstücken bestehen, die einen engeren Innendurchmesser als der Leitungsabschnitt und einen Außendurchmesser aufweisen, der dem Innendurchmesser des Leitungsabschnitts entspricht. Diese Drosselstellen bilden besonders einfach zu montierende Durchmesseränderungen, weil sie sich durch ihre zuverlässige Abstützung in dem Leitungsabschnitt nicht wie Drosselscheiben verkippen und damit ihre Funktion einbüßen können. Sie stellen damit die mit am einfachsten herzustellenden Drosselstellen dar.

Das Prinzip der Erfindung wird im Folgenden anhand einer Zeichnung beispielshalber noch näher erläutert. In der Zeichnung zeigen:
Figur 1: einen Rückschlagdämpfer mit flexiblen Wandungen, und
Figur 2: einen Rückschlagdämpfer mit einer Luftblase.

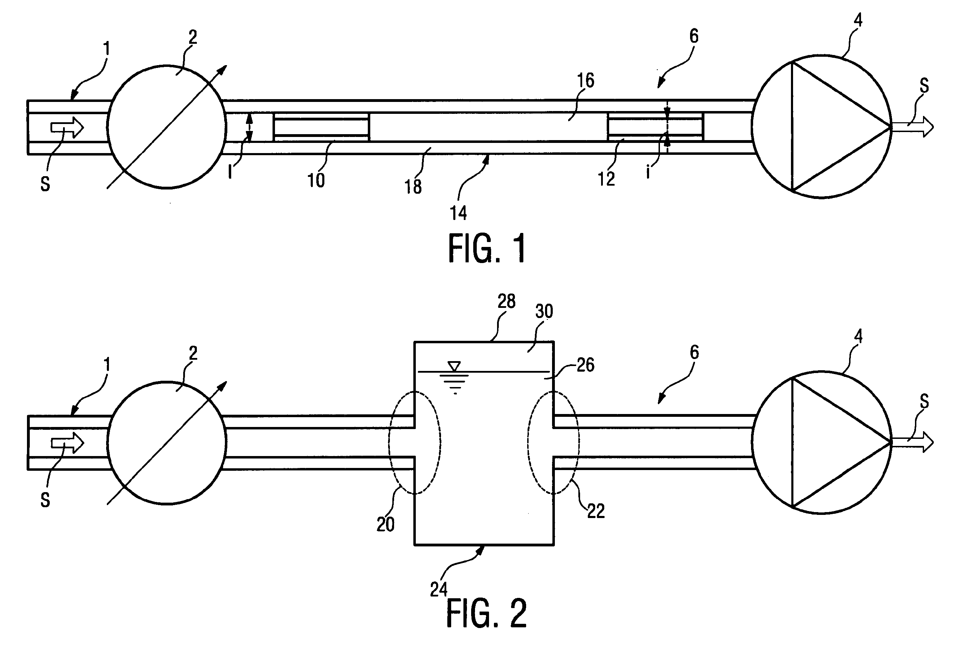

Figur 1 stellt einen kurzen Ausschnitt einer Flüssigkeitsleitung 1 zwischen einem nicht dargestellten Wasservorratstank und einer ebenfalls nicht gezeigten Heizeinrichtung einer Kaffeemaschine dar. In der Leitung 1 sind in Strömungsrichtung s ein Durchflussmesser 2 und eine Schwingkolbenpumpe 4 angeordnet, die ein Leitungsabschnitt 6 miteinander verbindet. Der Leitungsabschnitt 6 besteht aus einem Silikonschlauch, dessen Wandungen daher elastisch sind. Stromauf der Pumpe 4 und damit stromab des Durchflussmessers 2 sind im Leitungsabschnitt 6 zwei Rohrstücke 10, 12 aus Kunststoff angeordnet, die für jeweils zwei Durchmesseränderungen innerhalb des Leitungsabschnitts 6 sorgen und zusammen mit ihm einen Rückstoßdämpfer bilden. Sie sind etwa 1 bis 3 cm lang und haben einen Außendurchmesser, der dem Innendurchmesser I des Leitungsabschnitts 6 entspricht.

Wasser aus dem Wassertank erreicht nach Passieren des Durchflussmessers 2 zunächst eine Durchmesserverringerung auf einen Innendurchmesser i am Beginn des Rohrstücks 10, die über die Länge des Rohrstücks 10 beibehalten wird. An dessen Ende erweitert sich der Durchmesser in einen Behälter 14 auf den Durchmesser I des Leitungsabschnittes 6. Das Ende des Behälters 14 markiert eine Durchmesserverengung am Rohrstück 12 auf den Innendurchmesser i, die ebenfalls für die Länge des Rohrstücks 12 beibehalten wird, bevor sich der Leitungsabschnitt 6 am Ende des Rohrstücks 12 auf seinen ursprünglichen Durchmesser I stromauf der Pumpe erweitert. Die beiden Rohrstücke 10 und 12 begrenzen also den Behälter 14, der ein Entspannungsvolumen 16 als Teil des zwischen dem Wassertank und der Heizeinrichtung geförderten Wassers enthält.

Der Betrieb der Pumpe 4 führt zu Druckrückstößen entgegen der Förderrichtung, die bis zum Durchflussmesser 2 zurückreichen können. Treten sie auf, wird das druckbeaufschlagte Wasser jetzt schon vor der Durchmesserverringerung durch das Rohrstück 12, jedenfalls aber vor der Durchmesserverringerung durch das Rohrstück 10 gestaut. Der Stau sorgt dafür, dass nicht die gesamte Druckenergie bzw. das gesamte zurückgeschobene Wasser unmittelbar in den Durchflussmesser 2 eintritt. Nur noch ein sehr geringer Teil dessen durchtritt die Engstelle im Rohrstück 10. Der verbleibende und weitaus größere Druckanteil wird im Behälter 14 dadurch abgebaut, dass die Wandungen 18 bei Auftritt eines Rückstoßes ausbauchen. Die Expansion des Entspannungsvolumens 16 baut also den Druck ab, sodass er den Durchflussmesser 2 nicht mehr erreicht. Durch die ausbleibenden Druckstöße entgegen der Förderrichtung wird das Signal des Durchflussmessers 2 nicht mehr verfälscht, sodass er zuverlässige Angaben. über die tatsächlich geförderte Wassermenge liefert.

Der in Figur 1 dargestellte Rückstoßdämpfer ist zur Ausnutzung der Flexibilität des Behälters 14 sorgfältig einzubauen. Der Leitungsabschnitt 6 muss im Bereich des Behälters 14 eine ausreichende Expansionsmöglichkeit haben, um die Wirksamkeit des Rückstoßdämpfers zu gewährleisten. Diese Randbedingungen sind bei einem Rückstoßdämpfer gemäß Figur 2 nicht zu berücksichtigen. Figur 2 stellt einen entsprechenden Ausschnitt einer Flüssigkeitsleitung 1 zwischen einem Wasservorratstank und einer Heizeinrichtung dar. Auch hier sind in Strömungsrichtung s ein Durchflussmesser 2 und eine Schwingkolbenpumpe 4 angeordnet, die durch einen Leitungsabschnitt 6 miteinander verbunden sind. Im Leitungsabschnitt 6 ist ein Entspannungstank 24 angeordnet, der ein weitaus größeres Volumen umfasst als der entsprechende Leitungsabschnitt 6 bei gleicher Länge. Eingangs des Tanks 24 ergibt sich an der Mündung 20 des Leitungsabschnitts 6 eine Querschnittserweiterung, beim Ausgang 22 dagegen eine Querschnittsverengung. Dazwischen ist ein Entspannungsvolumen 26 im Tank 24 enthalten. Das Volumen 26 nimmt jedoch nicht das komplette Volumen des Tanks 24 ein, sondern lässt einen Raum für eine Luftblase 30 frei. Im Gegensatz zum Behälter 14 kann der Entspannungstank 24 über starre Wandungen 28 verfügen. Durch seine Formstabilität ist die Gefahr einer fehlerhaften Montage des Tanks 24 reduziert.

Druckstöße der Pumpe 4 entgegen der Förderrichtung gelangen durch den Ausgang 22 in den Tank 24. Das druckbeaufschlagte Wasser staut sich aufgrund der engen Mündung 20 im Tank 24. Hier kann es expandieren, indem es die Luftblase 30 komprimiert. Nach Abbau des Druckstoßes und erneuter Förderung des Wassers in Strömungs- bzw. Förderrichtung s kann sich auch die Luftblase 30 wieder entspannen und ihren ursprünglichen Raum innerhalb des Tanks 24 einnehmen. Nur ein geringer Teil des Druckstoßes gelangt durch die Mündung 20 in Richtung Durchflussmesser 2. Seine Messgenauigkeit ist damit weitgehend erhalten geblieben.

Da es sich bei den vorhergehenden, detailliert beschriebenen Rückstoßdämpfern um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Drosselstellen in anderer Form als in der hier beschriebenen folgen. Ebenso kann der Behälter in einer anderen Form ausgestaltet werden, wenn dies aus Platzgründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Flüssigkeitsleitung
- 2: Durchflussmesser
- 4: Schwingkolbenpumpe
- 6: Leitungsabschnitt
- 10, 12: Rohrstück
- 14: Behälter
- 16: Entspannungsvolumen
- 18: Behälterwandung
- 20: Mündung
- 22: Ausgang
- 24: Tank
- 26: Entspannungsvolumen
- 28: Wandung
- 30: Luftblase
- I: Innendurchmesser des Leitungsabschnitts 6
- i: Innendurchmesser des Rohrstücks 10, 12
- s: Strömungsrichtung

## Patentansprüche

1. Kaffeemaschine mit einem Wasservorratstank und einer Heizeinrichtung, die durch eine Flüssigkeitsleitung (1) verbunden sind, in der ein Durchflussmesser (2) und eine Schwingkolbenpumpe (4) angeordnet sind, **gekennzeichnet durch** einen Leitungsabschnitt (6) zwischen dem Durchflussmesser (2) und der Pumpe (4) mit mindestens zwei Durchmesseränderungen (10; 12; 20; 22), zwischen denen ein Behälter (14; 24) für ein Entspannungsvolumen (16; 26) als Teil des geförderten Wassers angeordnet ist, der das Entspannungsvolumen (16; 26) ausdehnbar aufnimmt.

2. Kaffeemaschine nach Anspruch 1, **gekennzeichnet durch** eine Durchmessererweiterung (20) stromauf und eine Durchmesserverengung (22) stromab des Behälters zur Ausbildung eines Tanks (24), der das Entspannungsvolumen (26) aufnimmt.

3. Kaffeemaschine nach einem der obigen Ansprüche, **gekennzeichnet durch** zwei Drosselstellen (10; 12) in dem Leitungsabschnitt (6) stromauf und stromab des Behälters (14), der das Entspannungsvolumen (16) aufnimmt.

4. Kaffeemaschine nach Anspruch 2, **dadurch gekennzeichnet, dass** der Tank (24) eine Luftblase (30) enthält.

5. Kaffeemaschine nach einem der obigen Ansprüche, **dadurch gekennzeichnet, dass** der Behälter (14) für das Entspannungsvolumen (16) dehnbare Wandungen (18) aufweist.

6. Kaffeemaschine nach Anspruch 3, **gekennzeichnet durch** Drosselscheiben als Durchmesserverengung.

7. Kaffeemaschine nach Anspruch 3, **gekennzeichnet durch** ein eingeschobenes Rohrstück (10; 12) als Drosselstelle mit engerem Innendurchmesser (i) und einem Außendurchmesser, der dem Innendurchmesser (I) des Leitungsabschnitts (6) entspricht.

## Claims

1. Coffee machine with a water storage tank and a heating device, which are connected by a liquid duct (1) in which a throughflow meter (2) and a reciprocating piston pump (4) are arranged, **characterised by** a duct section (6) between the throughflow meter (2) and the pump (4) with at least two diameter changes (10; 12; 20; 22), between which a container (14; 24) for a relief volume (16; 26) as part of the conveyed water is arranged, which by expansion receives the relief volume (16; 26).

2. Coffee machine according to claim 1, **characterised by** a diameter enlargement (20) upstream and a diameter narrowing (22) downstream of the container for formation of a tank (24), which receives the relief volume (26).

3. Coffee machine according to one of the preceding claims, **characterised by** two throttle points (10; 12) in the duct section (6) upstream and downstream of the container (14), which receives the relief volume (16).

4. Coffee machine according to claim 2, **characterised in that** the tank (24) contains an air bubble (30).

5. Coffee machine according to any one of the preceding claims, **characterised in that** the container (14) has stretchable walls (18) for the relief volume (16).

6. Coffee machine according to claim 3, **characterised by** throttle discs as diameter narrowing.

7. Coffee machine according to claim 3, **characterised by** an inserted pipe piece (10; 12) as throttle point with narrower inner diameter (i) and an outer diameter corresponding with the inner diameter (I) of the duct section (6).

## Revendications

1. Machine à café comprenant un réservoir d'eau et un dispositif de chauffage qui sont reliés au moyen d'une conduite de liquide (1) dans laquelle sont disposés un débitmètre (2) et une pompe à piston oscillant (4), **caractérisée par** une section de ligne (6) entre le débitmètre (2) et la pompe (4) ayant au moins deux variations de diamètre (10 ; 12 ; 20 ; 22) entre lesquelles est disposé un réservoir (14 ; 24) pour un volume de détente (16 ; 26) en tant que partie de l'eau transportée, lequel réservoir reçoit le volume de détente (16 ; 26) de manière expansible.

2. Machine à café selon la revendication 1, **caractérisée par** un élargissement de diamètre (20) en amont et un rétrécissement de diamètre (22) en aval du réservoir pour former une cuve (24) qui reçoit le volume de détente (26).

3. Machine à café selon l'une quelconque des revendications précédentes, **caractérisée par** deux endroits de restriction (10 ; 12) dans la section de ligne (6) en amont et en aval du réservoir (14) recevant le volume de détente (26).

4. Machine à café selon la revendication 2, **caractérisée en ce que** la cuve (24) contient une poche d'air (30).

5. Machine à café selon l'une quelconque des revendications précédentes, **caractérisée en ce que** le réservoir (14) présente des parois expansibles (18) pour le volume de détente (16).

6. Machine à café selon la revendication 3, **caractérisée par** des disques de restriction en tant que rétrécissement de diamètre.

7. Machine à café selon la revendication 3, **caractérisée par** un morceau de tube inséré (10 ; 12) en tant qu'endroit de restriction, avec diamètre intérieur (I) plus étroit et un diamètre extérieur correspondant au diamètre intérieur (I) de la section de ligne (6).
